Europäisches Patentamt

European Patent Office

Office européen des brevets

(11) Veröffentlichungsnummer: **0 086 346**
**A1**

## (12) EUROPÄISCHE PATENTANMELDUNG

(21) Anmeldenummer: 83100410.6

(22) Anmeldetag: 19.01.83

(51) Int. Cl.³: **G 03 B 27/52**, G 03 G 15/04

(30) Priorität: **28.01.82 DE 3202799**

(43) Veröffentlichungstag der Anmeldung: **24.08.83**
**Patentblatt 83/34**

(84) Benannte Vertragsstaaten: **DE FR GB IT**

(71) Anmelder: **AGFA-GEVAERT Aktiengesellschaft,**
**D-5090 Leverkusen 1 (DE)**

(72) Erfinder: **Burger, Erich, Ter-Meer-Strasse 17,**
**D-8025 Unterhaching (DE)**
Erfinder: **Schnall, Günther, Garchinger Strasse 20,**
**D-8057 Eching (DE)**
Erfinder: **Bickl, Horst, Dr., Heilmannstrasse 13,**
**D-8023 Pullach (DE)**

(54) **Optisches Kopiergerät.**

(57) In einem optischen Kopiergerät wird die Vorlage mittels eines kurzbauenden Rasterabbildungssystems streifenweise auf einen zylinderförmigen Aufzeichnungsträger (102) abgebildet. Um dabei nach Art der wesentlich raumaufwendigeren Buchkopieranordnungen konventioneller Art eine gerätefeste Vorlagenauflage (5) vorsehen zu können, ist das Rasterabbildungssystem (20–22) auf einem Gelenkgetriebe (12, 14) angeordnet, welches einen die Beleuchtungseinrichtung (10) für die Vorlage (6) tragenden Abtastschlitten (2) mit der am Aufzeichnungszylinder (102) liegenden Abbildungsstelle verbindet und an dessen Gelenkpunkten (11, 13, 15) Umlenkspiegel (17–19) für den Abbildungsstrahlengang schwenkbar gelagert sind. Die schwenkbaren Spiegelträger (16) der Umlenkspiegel werden mittels eines zwischen die diesen Spiegelträgern benachbarten Getriebeglieder einschaltbaren Nachführgetriebes (31, 32) so verschwenkt, daß die Spiegellote während der Abtastbewegung des Gelenkgetriebes auf der Winkelhalbierenden der relativ zueinander bewegten Getriebeglieder verbleiben. Zur Gewährleistung einer während des gesamten Nachführvorganges ungestörten Abbildung greift an jedem der Spiegelträger (16) eine Spielausgleichsfeder (38) an.

0086346

AGFA-GEVAERT AG LEVERKUSEN
Camera-Werk München
Patent- und Lizenzwesen


CW 2628.8 PB/MB

51-bg-se, 0677C

Optisches Kopiergerät


Die Erfindung betrifft ein optisches Kopiergerät, bei welchem die Vorlage mittels eines relativ zur Vorlage bewegten Rasterabbildungssystems streifenweise auf einen zylinderförmigen Aufzeichnungsträger abgebildet wird, dessen Oberfläche sich während der optischen Abtastung der Vorlage mit einer der Abtastgeschwindigkeit proportionalen Geschwindigkeit relativ zur optischen Achse des Abbildungssystems bewegt.

Ein optisches Kopiergerät dieser Art ist z.B. Gegenstand der DE-OS 26 37 514 und der DE-OS 26 54 319. Die in diesen Kopiergeräten vorgesehenen Rasterabbildungssysteme haben den Vorteil, daß der zwischen der Vorlagenebene und der Abbildungsstelle erforderliche Abstand von der Größe des Abbildungsstreifens bzw. von dessen Ausdehnung quer zur Bewegungsrichtung von Vorlage und Aufzeichnungsträger weitgehend unabhängig

CW 2628.8 PB/MB

ist. Zum Übertragen des Bildes einer ebenen Vorlage auf einen zylinderförmigen Aufzeichnungsträger mußte jedoch bisher stets diese ebene Vorlage während des optischen Abtastvorganges mittels eines Transportschlittens für dreidimensionale Vorlagen oder mittels einer Durchlauftransporteinrichtung für blattförmige Vorlagen gegenüber dem gerätefest angeordneten Rasterabbildungssystem bewegt werden.

Es ist das Ziel der vorliegenden Erfindung, ein mit einem relativ kurz bauenden Rasterabbildungssystem ausgestattetes optisches Kopiergerät zu schaffen, bei welchem die Vorlage während des optischen Abtastvorganges nach Art des sog. Buchkopiergerätes in Ruhe bleiben kann.

Diese Aufgabe wird gemäß der Erfindung durch die im Kennzeichen des Anspruchs 1 angegebene Merkmalskombination gelöst. Einzelheiten der Erfindung ergeben sich aus den Unteransprüchen und aus der Beschreibung, in welcher anhand der Zeichnung verschiedene Ausführungsformen der Erfindung beispielsweise erörtert werden. Dabei zeigt

Figur 1   einen Schnitt durch ein erfindungsgemäßes Kopiergerät,

Figur 2   einen Schnitt durch eine Nachführeinrichtung für den schwenkbaren Umlenkspiegel entlang der Linie II-II in Figur 3,

Figur 3   einen Schnitt durch die Anordnung entlang der Linie III-III in Figur 2,

Figur 4   einen Schnitt durch die Anordnung entlang der Linie IV-IV in Figur 1,

Figur 5   einen Schnitt durch eine weitere Nachführeinrichtung für den schwenkbaren Umlenkspiegel entlang der Linie V-V in Figur 6,

Figur 6    einen Schnitt durch die Anordnung entlang der Linie VI-VI in
           Figur 5,

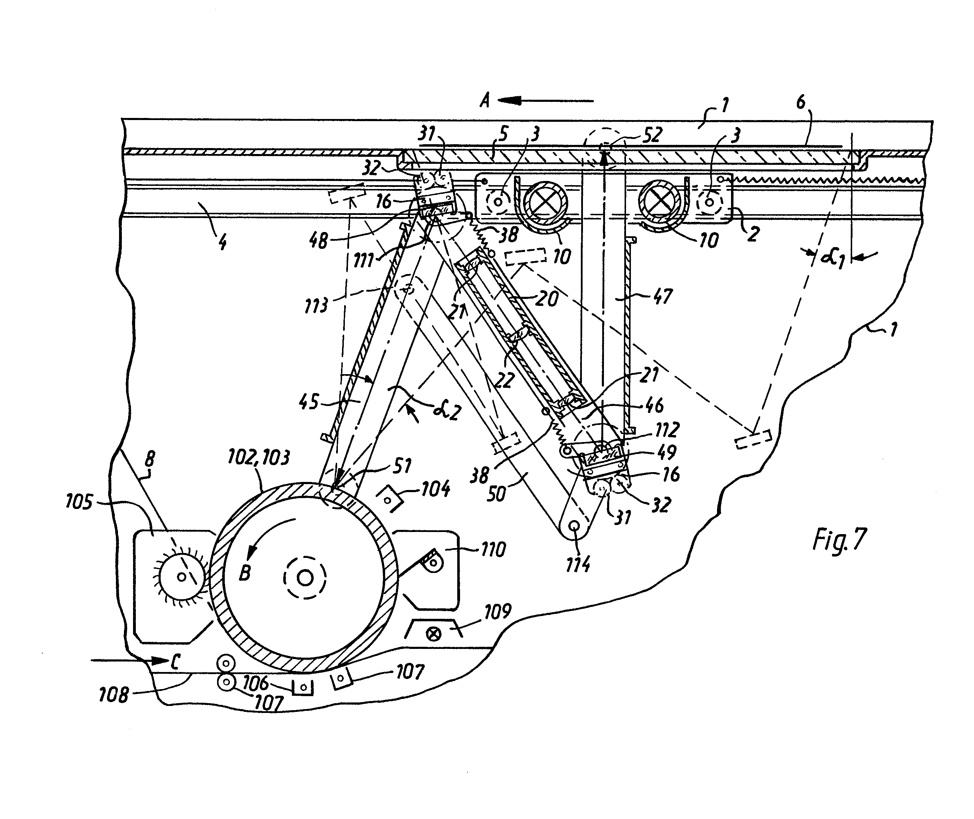

Figur 7    eine andere Ausführungsform des erfindungsgemäßen Kopiergerätes.

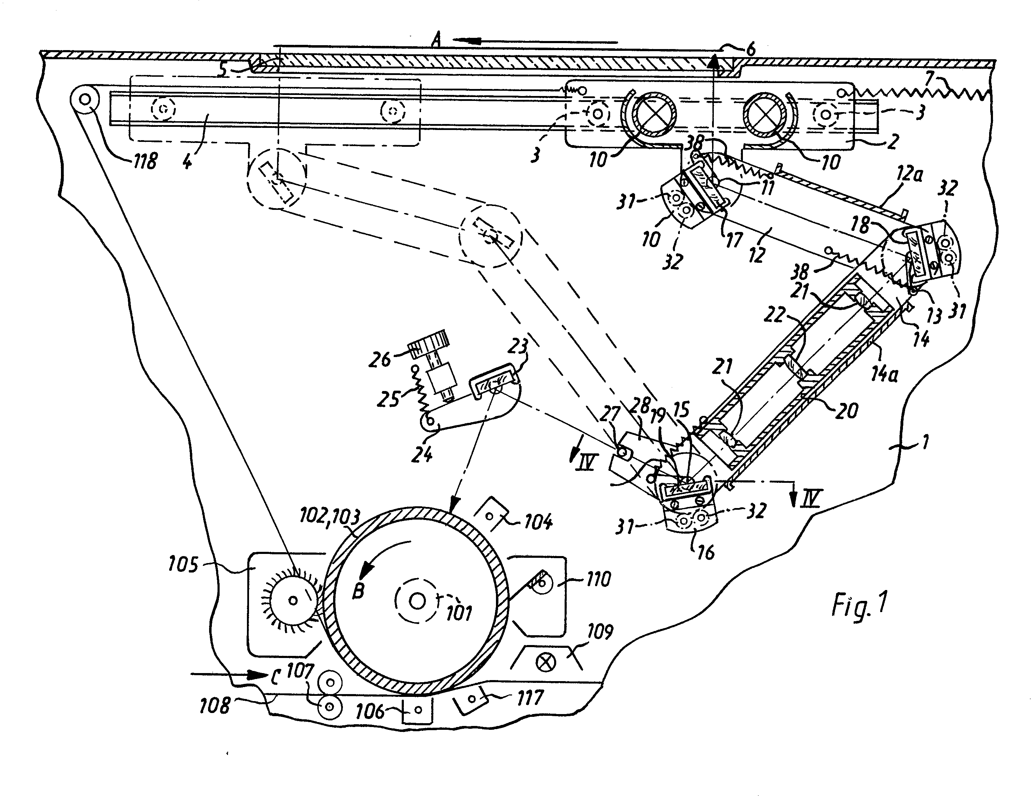

Gemäß Figur 1 ist in einem Gerätegehäuse 1 ein Abtastschlitten 2 mittels
Führungsrollen 3 an Führungsschienen 4 geführt. Er dient der optischen
Abtastung einer auf eine transparente Auflageplatte 5 aufgelegten Vorlage 6. Der während des Belichtungsvorganges in Pfeilrichtung A bewegte
Schlitten 2 steht unter der Wirkung einer Rückholfeder 7 und wird in Abtastrichtung A mittels eines Schnurzuges 8 angetrieben, welcher über eine
Umlenkrolle 118 gelegt und auf einer mittels einer nicht dargestellten,
lösbaren Kupplung 101 mit dem in Pfeilrichtung B umlaufenden Aufzeichnungszylinder 102 verbindbaren Schnurrolle 103 aufgewickelt ist. Der Abtastschlitten 2 trägt in der üblichen Weise der Beleuchtung der Vorlage 6
dienende Leuchtstoffröhren 10.

Am Umfang des mit einem Fotoleiter beschichteten Aufzeichnungszylinders 102 sind in bekannter Weise eine Koronaentladungsvorrichtung 104 zur
gleichmäßigen Aufladung der Fotoleiteroberfläche, eine Entwicklungseinrichtung 105, beispielsweise eine Magnetentwicklungseinrichtung, eine
Übertragungskorona 106, und eine Abnahmekorona 117 angeordnet. Der Übertragungsstelle für das Pulverbild wird mittels eines Transportwalzenpaares 107 der endgültige Kopieträger 108 in Pfeilrichtung C zugeführt. Der
Fixierung des übertragenen Pulverbildes dient eine Fixiereinrichtung 109,
beispielsweise eine Strahlungsfixiereinrichtung. Nach der Abnahme des Kopieträgers wird der Aufzeichnungsträger 102 mittels einer Reinigungseinrichtung 110, beispielsweise einer Schaberreinigungseinrichtung, von Pulverresten befreit.

An Achsen 11 des Schlittens 2 sind jeweils zwei Gelenkhebel 12 angelenkt, welche mittels Achsen 13 an weiteren, an gerätefeste Achsen 15 gelagerten Schwenkhebeln 14 angelenkt sind. Die jeweils zusammengehörigen Schwenkhebelpaare 12 bzw. 14 sind untereinander durch biegesteife Stege 12a bzw. 14a verbunden und gegen Verwinden gesichert.

An den Achsen 11, 13 und 15 sind Spiegelhalter 16 für Umlenkspiegel 17, 18 und 19 gelagert. An den Spiegelhaltern 16 greifen im folgenden noch näher beschriebene, von den den Umlenkspiegeln benachbarten Gelenkhebeln angetriebene Nachführgetriebe an, welche die Lotachse des jeweiligen Umlenkspiegels 17, 18 oder 19 während der Abtastung der Vorlage auf der Winkelhalbierenden der zwischen den Spiegeln verlaufenden Strahlengänge halten. Als Antriebsglied für das Nachführgetriebe des gerätefest gelagerten Umlenkspiegels 19 dient ein mittels eines Stiftes 27 am Gehäuse 1 festgelegter Hebel 28. Die während der Abtastbewegung erreichte Endlage des Gelenkgetriebes ist mit gestrichelten Linien in die Figur eingezeichnet.

An den Gelenkhebeln 14 ist ein in einem Gehäuse 20 eingeschlossenes Rasterobjektiv befestigt, welches zwei Abbildungsleisten 21, eine Feldlinsenleiste 22 sowie die bei Rasterobjektiven üblichen, in der Figur nicht im einzelnen dargestellten Apperturblenden, Feldblenden und Kanaltrenner umfaßt.

Im dargestellten Beispiel beträgt das Verkleinerungsverhältnis in der Zwischenabbildungsebene etwa 1 : 4. Dieses Verhältnis läßt sich ggf. durch weiteres Heranrücken der Abbildungsleisten 21 an die Gelenkpunkte und/oder durch Vergrößerung des das Rasterabbildungssystem tragenden Schwenkhebels 14 gegenüber den übrigen Abschnitten des zusammengefalteten Strahlenganges und/oder durch Anordnung der Linsenleisten 21 und 22 in verschiedenen Abschnitten des durch die Umlenkspiegel gefalteten Strahlenganges praktisch beliebig verändern. Auf diese Weise ist es u.a. auch möglich, sich der in manchen Fällen angestrebten 1 : 1-Zwischenabbildung zu nähern. In jedem Falle ist es günstig, die eigentlichen Abbildungslinsen 21 in der Nähe der Gelenke anzuordnen, wodurch dann die an diesen Gelenken befindlichen Umlenkspiegel 18 und 19 besonders klein und trägheitsarm bemessen werden können. Selbstverständlich könnten im Falle des eingangs genannten Rasterabbildungssystems gemäß der DE-OS 26 37 514, bei welchem mindestens eines der am Abbildungsvorgang beteiligten optischen Elemente von einer mit einer Spiegelfläche kombinierten optischen Fläche positiver Brechkraft gebildet wird, die erfindungsgemäßen, schwenkbaren Umlenkspiegel von diesen Spiegelflächen selbst gebildet werden, so daß die Abstände zwischen den Abbildungselementen des Rasterabbildungssystems wenigstens teilweise mit den Abschnitten des gefalteten Strahlenganges übereinstimmen.

Es ist ferner günstig, die rechteckige, transparente Auflageplatte 5 für die Vorlage so anzuordnen, daß die Vorlage 6 mit ihrer längeren Seite quer zur Bewegungsrichtung des Abtastschlittens 2 auf das Kopiergerät aufgelegt werden muß. In diesem Fall kann die für die Bemessung der Getriebeglieder 12 und 14 maßgebliche Bewegungsmöglichkeit des Schlittens 2 auf die kürzere Seitenlänge des abzubildenden Formates beschränkt bleiben, während die größere Seitenlänge sowohl auf die Länge der Getriebeglieder, als auch auf die optische Baulänge des Rasterabbildungssystems ohne Einfluß bleibt.

Zur Komplettierung des Strahlenganges dient gemäß Fig. 1 noch ein weiterer, gerätefester Umlenkspiegel 23, welcher den Strahlengang senkrecht auf die Oberfläche des Aufzeichnungsträgers 9 lenkt, was im Falle der Vorlagenoberfläche durch den Spiegel 17 bewirkt wird. Der Spiegel 23 ist für Geräte zur indirekten Elektrofotografie auch deshalb erforderlich, weil das Rasterobjektiv nur mit einer geraden Anzahl von Umlenkspiegeln in der bei diesen Geräten erforderlichen Weise eine nach Umdruck seitenrichtige Abbildung liefert. Der Spiegel 23 ist auf einem schwenkbaren Halter 24 gelagert, welcher unter der Wirkung einer Zugfeder 25 einer gerätefesten Stellschraube 26 anliegt. Mittels der Stellschraube 26 können toleranzbedingte Verschiebungen der Ausgangslage der mit den Spiegeln 17-19 zusammenwirkenden Nachführgetriebe kompensiert werden. Weitere Verschiebungen gegenüber der einmal richtig eingestellten Ausgangslage können dann aufgrund der an jedem Spiegel angreifenden Spielausgleichsfeder während des Betriebes nicht mehr eintreten.

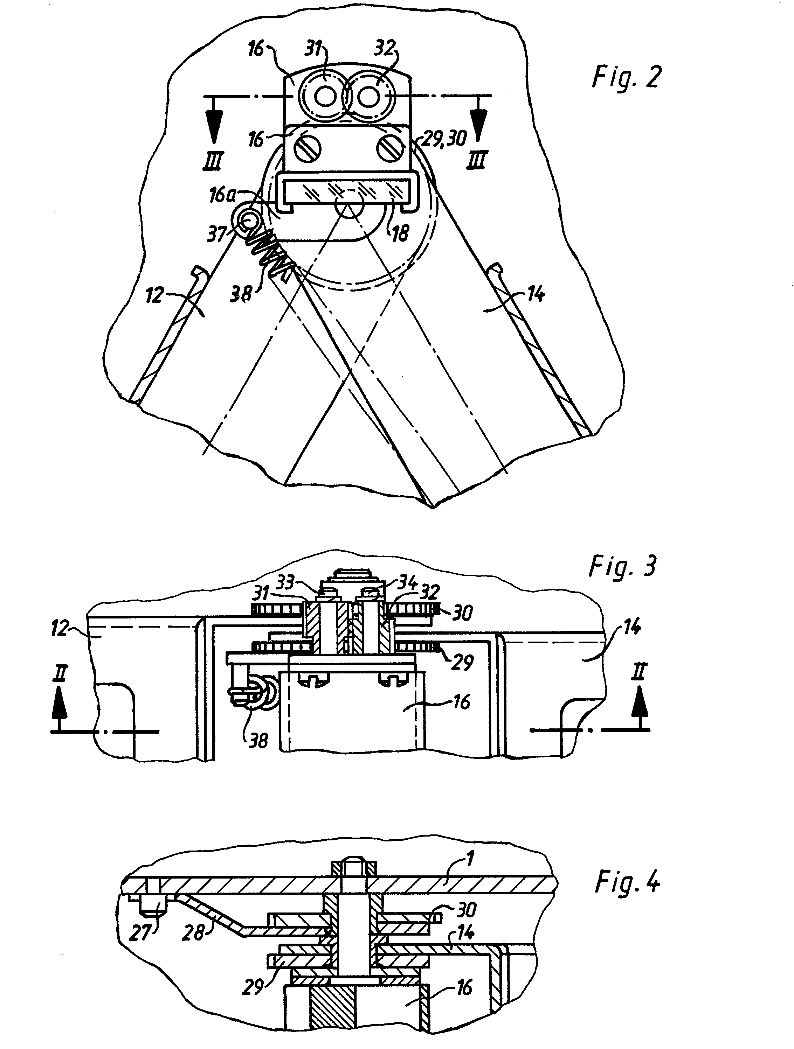

Gemäß den Figuren 2-4 ist an den beiden Gelenkhebeln 12 und 14 je ein Zahnrad 29 bzw. 30 befestigt, welches mit je einem Zahnrad 31 und 32 kämmt. Die Zahnräder 31 und 32 sind auf je einem Stift 33 und 34 gelagert, welcher am Spiegelhalter 16 befestigt ist. Die Länge der Verzahnung der miteinander in Eingriff stehenden Zahnräder 31 und 32 ist so gewählt, daß jedes der Zahnräder nur mit einem der Gegenzahnräder 29 bzw. 30 kämmt. Dadurch zieht jede Relativdrehung des Zahnrades 29 gegenüber dem Halter 16 eine entgegengesetzt gleiche Relativdrehung des Zahnrades 30 gegenüber diesem Halter nach sich, so daß der schwenkbare Spiegelhalter 16 bei jeder gegenseitigen Verdrehung der beiden mit den Zahnrädern 29 und 30 verbundenen Gelenkhebel 12 und 14 auf der Winkelhalbierenden zwischen den beiden Hebeln verbleibt, sofern er sich in seiner Ausgangsstellung dort befunden hat. Für den Spielausgleich sorgt dabei eine an einem Stift 37 eines Armes 16a des Spiegelhalters 16 eingehängte, mit ihrem anderen Ende an einem entsprechenden Stift des entsprechenden Gelenkhebels hängende Zugfeder 38.

Wie aus Figur 4 ersichtlich ist, wird im Falle des gerätefest gelagerten Gelenkhebels 14 das Zahnrad 30 des Nachführgetriebes durch einen Hebel 28 angetrieben, welcher mittels eines Stiftes 27 am Gestell 1 des Kopiergerätes festgelegt ist.

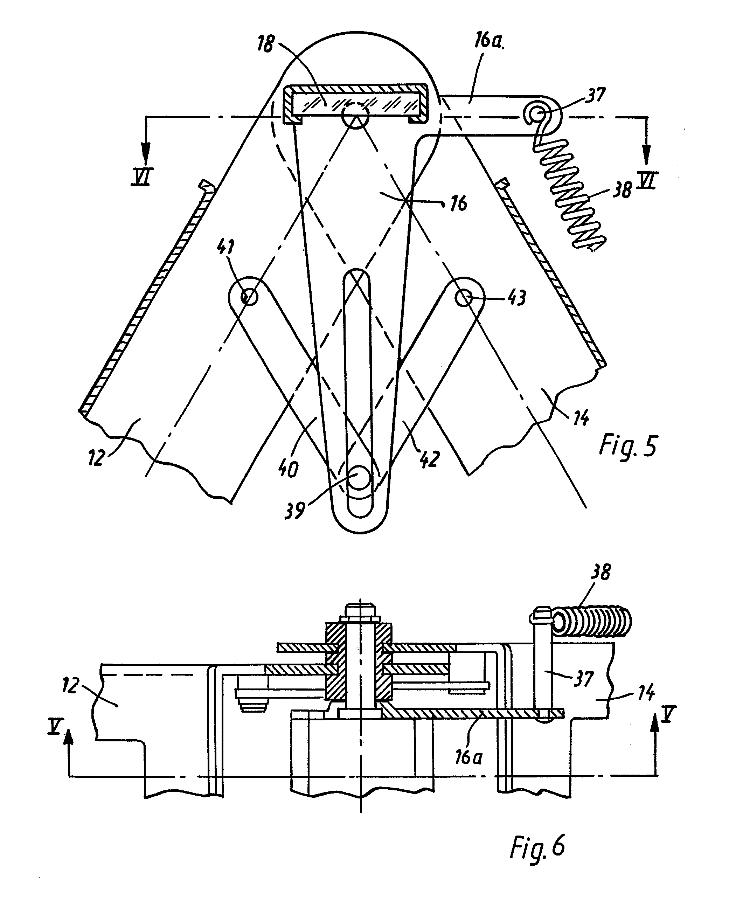

Die Figuren 5 und 6 zeigen eine andere Art des Nachführgetriebes für den Spiegelhalter 16. Dabei ist an einem Arm 16b des Spiegelhalters 16 ein Langloch 16c ausgebildet, in welchem ein Stift 39 geführt ist. Der Stift 39 ist an einem Hebel 40 befestigt, welcher an einem Stift 41 des Schwenkhebels 12 gelagert ist. An dem Stift 39 ist ein weiterer Hebel 42 angelenkt, welcher an einem Stift 43 des Schwenkhebels 14 gelagert ist. Dadurch entsteht eine Parallelogrammführung, welche den Spiegelhalter 16 auf der Mittelsenkrechten zwischen den beiden Schwenkhebeln 12 und 14 hält. Den Spielausgleich besorgt wieder eine an einem Arm 16a des Spiegelhalters 16 angreifende Zugfeder 38.

Gemäß Fig. 7 ist ein aus drei Getriebegliedern 45-47 bestehendes Gelenkgetriebe einerseits an einer gerätefesten Achse 51 und andererseits an einer am Abtastschlitten 2 angeordneten Achse 52 gelagert. Das Zentrum der Achse 51 fällt mit der Oberfläche des Aufzeichnungszylinders 102, das Zentrum der Achse 52 mit der Oberfläche der transparenten Auflagefläche 5 für die Vorlage 6 zusammen. Im Bereich des Lagers für die Achse 52 weist das Gerätegehäuse eine entsprechende Ausbuchtung 1a auf bzw. ist die Vorlagenauflagefläche gegenüber der Gehäuseoberfläche so weit abgesenkt, daß die erforderliche Bewegungsmöglichkeit für die neben der Auflageplatte 5 angeordneten Achslager gewährleistet ist.

An den Stellen, an welchen die Getriebeglieder 45-47 durch Achsen 111 und 112 miteinander verbunden sind, ist jeweils ein schwenkbarer Umlenkspiegel 48 und 49 gelagert. Jeder der beiden Umlenkspiegel ist an schwenkbaren Haltern 16 befestigt, welche mit Nachführgetrieben der vorstehend geschilderten Art verbunden sind. Das Rasterabbildungssystem 20-22 ist auf dem mittleren Getriebeglied 46 angeordnet.

Da sich im Falle des mit zwei Umlenkspiegeln 48 und 49 ausgestatteten Abbildungssystems der Auftreffwinkel $\alpha$ des Strahlenganges auf der Vorlagen- und Aufzeichnungsträgerebene während des Abtastvorganges ändert, ist

0086346

zwischen den beiden Getriebegliedern 45 und 47 eine an Achsen 113 und 114 angelenkte Verbindungsstange 50 eingefügt, welche zusammen mit dem Getriebeglied 46 ein Parallelogrammgestänge bildet. Dadurch wird erreicht, daß die beiden Getriebeglieder 45 und 47 sich nur parallel zueinander verschieben können, wodurch der Auftreffwinkel $\alpha_1$ an der Vorlage 6 sich stets in der gleichen Weise verändert wie der Auftreffwinkel $\alpha_2$ am Aufzeichnungsträger. Sofern diese beiden Winkel zu Beginn des Abtastvorganges in der zur Erfüllung der Scheimpflugbedingung, welche sich cum grano salis auch auf Rasterabbildungssysteme anwenden läßt, erforderlichen Weise gleich waren, bleibt somit diese Relation über den gesamten Abtastbereich erhalten. Die zu Beginn und Ende des Abtastvorganges erreichten Grenzlagen des Gelenkgetriebes sind wieder in gestrichelten Linien eingezeichnet.

CW 2628.8 PB/MB

**AGFA-GEVAERT AG LEVERKUSEN**
Camera-Werk München
Patent- und Lizenzwesen

CW 2628.8 PB/MB

51-bg-se, 0677C

<u>Ansprüche</u>

1. Optisches Kopiergerät, bei welchem die Vorlage mittels eines relativ zur Vorlage bewegten Rasterabbildungssystems streifenweise auf einen zylinderförmigen Aufzeichnungsträger abgebildet wird, dessen Oberfläche sich während der optischen Abtastung der Vorlage mit einer der Abtastgeschwindigkeit proportionalen Geschwindigkeit relativ zur optischen Achse des Abbildungssystems bewegt, <u>gekennzeichnet</u> durch folgende Kombination:

a)   Es ist eine gerätefeste, transparente Auflageplatte (5) für die Vorlage (6) vorgesehen,

CW 2628.8 PB/MB

b) das Rasterabbildungssystem (20-22) ist auf einem, einen die Beleuchtungseinrichtung (10) für die Vorlage tragenden Abtastschlitten (2) mit einer am Aufzeichnungszylinder (102) liegenden Abbildungsstelle verbindenden Gelenkgetriebe (12, 14, 45-47) angeordnet,

c) an den Getriebegelenken (11, 13, 15, 111, 112) sind schwenkbare Spiegelträger (16) für im Strahlengang des Rasterabbildungssystems (20-22) angeordnete Umlenkspiegel (17-19, 48, 49) gelagert,

d) jeder dieser schwenkbaren Spiegelträger (16) ist mit den beiden, ihm benachbarten Getriebegliedern des Gelenkgetriebes durch ein Nachführgetriebe 31, 32, 40, 42) verbunden, welches eine jeweils entgegengesetzt gleiche relative Drehbewegung dieser Getriebeglieder gegenüber dem Spiegelträger erzwingt.

2. Kopiergerät nach Anspruch 1, dadurch gekennzeichnet, daß am schwenkbaren Spiegelträger (16) eine Spielausgleichsfeder (38) angreift.

3. Kopiergerät nach Anspruch 1 oder 2, dadurch gekennzeichnet, daß am schwenkbaren Spiegelträger (16) zwei miteinander in Eingriff stehende Zahnräder (31, 32) gelagert sind, von denen jedes mit je einem mit einem der benachbarten Getriebeglieder verbundenen Zahnrad (29, 30) in Eingriff steht.

4. Kopiergerät nach Anspruch 1 oder 2, dadurch gekennzeichnet, daß ein auf dem zwischen den Getriebegliedern liegenden Gelenk eines von den beiden Getriebegliedern und zwei an diesen Getriebegliedern angelenkten Schwenkhebeln (41, 42) gebildeten Parallelogrammes angeordneter Stift (39) mit einem an dem schwenkbaren Spiegelträger (16) angeordneten Langloch (16e) in Eingriff steht.

5. Kopiergerät nach einem der vorhergehenden Ansprüche, dadurch gekennzeichnet, daß zur Erzeugung einer nach Umdruck seitenrichtigen Abbildung eine geradzahlige Anzahl von Umlenkspiegeln (17-19, 23, 48, 49) vorgesehen ist.

6. Kopiergerät nach einem der Ansprüche 1-5, dadurch gekennzeichnet, daß vier Umlenkspiegel (17-19, 23) vorgesehen sind, von denen drei Spiegel (17-19) an den Gelenkpunkten eines aus zwei Getriebegliedern (12, 14) bestehenden, einen schwenkbar am Abtastschlitten (2) gelagerten Umlenkspiegel (11), mit einem schwenkbar am Gerät gelagerten Umlenkspiegel (15) verbindenden Gelenkgetriebes angeordnet sind, und von denen der vierte Spiegel (23) gerätefest angeordnet ist.

7. Kopiergerät nach Anspruch 6, dadurch gekennzeichnet, daß der gerätefest angeordnete Umlenkspiegel (23) mittels einer Einstellvorrichtung (25, 26) in seiner Winkelstellung justierbar ist.

8. Kopiergerät nach einem der Ansprüche 1-5, dadurch gekennzeichnet, daß zwei schwenkbar an den Verbindungsstellen von drei Getriebegliedern (45-47) gelagerte Umlenkspiegel (48, 49) vorgesehen sind, daß das spiegelferne Ende des vorlagenseitigen Getriebegliedes (47) um eine in der Vorlagenebene liegende Achse (52) schwenkbar am Abtastschlitten (2) und das spiegelferne Ende des aufzeichnungsträgerseitigen Getriebegliedes (45) um eine in der Aufzeichnungsträgerebene liegende, gerätefeste Achse (51) schwenkbar gelagert ist, und daß die beiden am Abtastschlitten bzw. gerätefest gelagerten Getriebeglieder durch ein lediglich Translationsbewegungen der beiden Getriebeglieder gegeneinander zulassendes Getriebe (50), beispielsweise ein Parallelogrammgestänge, miteinander verbunden sind.

CW 2628.8 PB/MB

9. Kopiergerät nach einem der vorhergehenden Ansprüche, dadurch gekennzeichnet, daß die transparente, rechteckige Auflageplatte (5) für die Vorlagen (6) mit ihrer längeren Seite quer zur Bewegungsrichtung (A) des Abtastschlittens (2) angeordnet ist.

Hierzu 4 Blatt Zeichnungen

0086346

Fig.1

0086346

Fig. 2

Fig. 3

Fig. 4

0086346

Fig. 5

Fig. 6

Fig. 7

0086346

Europäisches
Patentamt

**EUROPÄISCHER RECHERCHENBERICHT**

0086346

Nummer der Anmeldung

EP 83 10 0410

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-2 013 902 (XEROX) <br> * Figuren 1, 2 * | 1 | G 03 B 27/52 <br> G 03 G 15/04 |
| | --- | | |
| D,A | DE-A-2 654 319 (AGFA-GEVAERT) | | |
| | --- | | |
| D,A | DE-A-2 637 514 (AGFA-GEVAERT) | | |
| | ----- | | |

RECHERCHIERTE SACHGEBIETE (Int. Cl. 3)

G 03 B 27/00
G 03 G 15/00

Der vorliegende Recherchenbericht wurde für alle Patentansprüche erstellt.

| Recherchenort <br> BERLIN | Abschlußdatum der Recherche <br> 21-04-1983 | Prüfer <br> HOPPE H |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

-------------------------------------------

& : Mitglied der gleichen Patentfamilie, übereinstimmendes Dokument

EPA Form 1503. 03.82